# EUROPEAN PATENT APPLICATION

(11) **EP 2 181 743 A1**
(43) Date of publication of application: **05.05.2010**
(21) Application number: 08167875.7
(22) Date of filing: 29.10.2008
(51) Int. Cl.: B01D 5/00, E03B 3/28, B01D 53/26

(54) **Device for producing water from ambient air**

(71) Applicant: Dutch Rainmaker B.V., 8934 CJ Leeuwarden (NL)
(72) Inventor: Metz, Sybrandes Jacob, 8448 SB HEERENVEEN (NL)
(74) Representative: Uittenbogaart, Gustaaf Adolf

(57) **Abstract**

The invention concerns a device for producing water from ambient air comprising a heat pump with a cooling unit and a receiver for collecting the water that formed as condensed water vapour on a cooling surface of the cooling unit.

In accordance with the invention the cooling surface is located in a closed space and a water vapour permeable membrane separates the ambient air and the closed space.

## Description

The invention concerns a device in accordance with the preamble of claim 1. Such a device is known and in the known devices the ambient air circulates around the cooling surface and the water vapour in the ambient air condenses on the cooling surface. In the known devices, the cooling surface also cools the ambient air. This means that only part of the available cooling capacity is available for condensing the water vapour, which is a disadvantage. A further disadvantage is that the ambient air contains dust particles that will mix with the condensed water vapour and contaminate the water collected from the cooling surface.

In order to overcome these disadvantages the device is in accordance with claim 1. In this way, the ambient air does not enter the closed room and is not exposed to the cooling surface, so that the cooling surface cools only the water vapour and all water vapour that contacts the cooling surface passes through the membrane that filters out all dust particles.

In accordance with an embodiment, the device is according to claim 2. In this way, the size of the closed space can be small as there is no need to locate the cooling unit inside the closed space. In addition, this makes it easier to maintain a low pressure in the closed space.

In accordance with an embodiment, the device is according to claim 3. In this way, the dimensions of the closed space can be small and the condensing of the water vapour can take place at a specific location that can be easy accessible.

In accordance with an embodiment, the device is according to claim 4. In this way, a simple heat pump is available.

In accordance with an embodiment, the device is according to claim 5. This reduces the heat transfer between the cooling surface and the walls of the closed space, so that more cooling capacity is available for condensing water vapour.

In accordance with an embodiment, the device is according to claim 6. This reduces heat transfer into the closed space, so that all cooling capacity of the cooling unit is available for condensing water vapour.

In accordance with an embodiment, the device is according to claim 7. In this way, the membrane can withstand to the pressure differences over the membrane easily.

In accordance with an embodiment, the device is according to claim 8. In this way, it is easy to replace the membrane.

In accordance with an embodiment, the device is according to claim 9. This prevents clogging of the openings in the membrane by fluid and the membrane remains permeable for water vapour.

In accordance with an embodiment, the device is according to claim 10. In this way, it is easy to clean the outside surfaces of the membrane and to remove the dust from the ambient air.

In accordance with an embodiment, the device is according to claim 11. In this way, the air around the membrane is refreshed continuously, so that as much water vapour in the air as possible can pass the membrane.

In accordance with an embodiment, the device is according to claim 12. In this way, the excess heat of the heat exchanger creates the airflow over the membrane so that no additional equipment is necessary and no additional costs arise.

In accordance with an embodiment, the device is according to claim 13. In this way the capacity of the heat exchanger and the membrane is increased

In accordance with an embodiment, the device is according to claim 14. In this way, the available wind power or water power is used in the most efficient way to obtain clean fresh water.

In accordance with an embodiment, the device is according to claim 15. This obtains a robust and compact installation that is quick and easy to erect.

In accordance with an embodiment, the device is according to claim 16. In this way, the available wind that drives the wind turbine circulates air over the membrane and/or the heat exchanger as well, so that no additional equipment is required.

The invention will be described hereafter with the aid of an illustrative embodiment and with reference to a drawing, in which:
Figure 1 shows a diagram of an embodiment for producing water from ambient air,
Figure 2 shows a schematic view of a wind turbine with the embodiment of figure 1, and
Figure 3 shows a section of a membrane assembly as used in embodiments of figure 1 and 2.

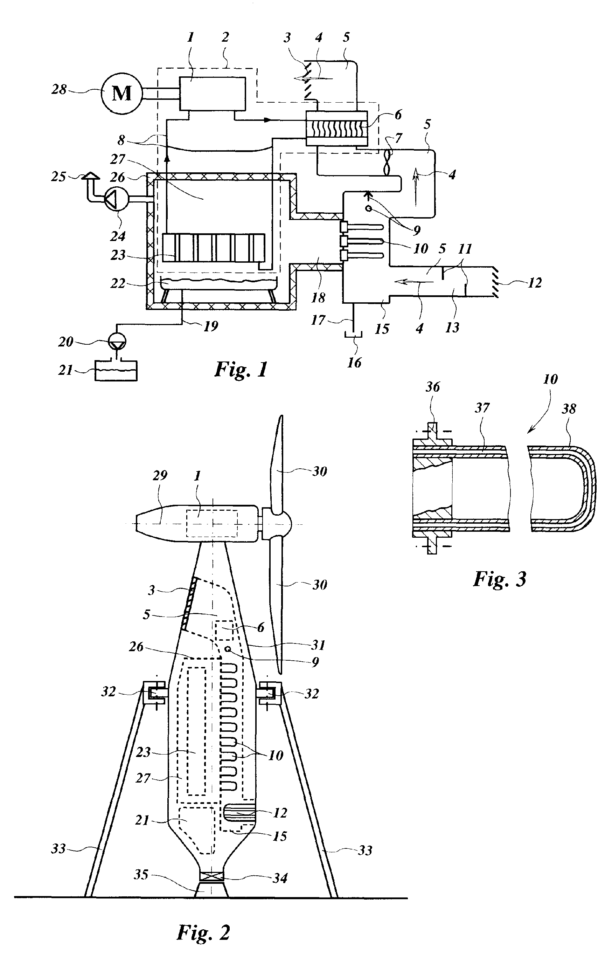

Figure 1 shows a heat pump 2, which is indicated with an interrupted line and which comprises a compressor 1, a condenser 6 and an evaporator 23, connected by piping 8. The evaporator 23 is located in a closed space 27 that has an insulating wall 26. A canal 18 connects the closed space 27 to the ambient air, membrane assemblies 10 close the opening of the canal 18. The membrane assemblies 10 extend into an air duct 5, through which ambient air flows in flow direction 4 so that the membranes of the membrane assemblies 10 are always surrounded by fresh ambient air.

The ambient air enters the air duct 5 through inlet opening 12 and passes partitions 11, which remove water droplets from the air, the water droplets assemble as water in a water receptacle 15. The air flows upwards in flow direction 4 and passes over the membrane assemblies 10, flows through condenser 6 and out into the open air through outlet opening 3. The condenser 6 heats the airflow, which will cause the air to rise upwards so that the air will flow in the flow direction 4. If necessary a ventilator 7, indicated with interrupted lines in air duct 5, will boost the airflow, which ensures an uninterrupted flow of fresh air over the membrane assemblies 10 and through the condenser 6.

A drive unit 28 drives the compressor 1 of heat pump 2. The heat pump 2 is designed such, that in operation heat is transported from the closed space 27 to the condenser 6 and from the condenser 6 the heat disappears into the ambient air. The evaporator 23 is in the closed space 27 and a control system (not shown) of the heat pump 2 arranges that the temperature of the evaporator 23 is below 20°C or preferably below 10°C but at least slightly above 0°C.

It will be clear to the skilled man that as long as there is water in the closed space 27 the gas pressure of the water vapour in the closed space 27 will be determined by the temperature of the water, as the water will evaporate to water vapour. In most situations, the temperature of the water will be equal to the temperature of the evaporator 23. The ambient air also contains water vapour with a gas pressure. The water vapour pressure in the ambient air depends on the temperature of the air and the water saturation level in the ambient air.

The membrane assemblies 10 have membranes that separate the ambient air and the inside of the closed space 27. The membranes in the membrane assemblies 10 are permeable for water vapour and substantial impermeable for other gases such as nitrogen and oxygen. This means that water vapour can enter into the closed space 27 if the water vapour pressure in the ambient air is higher than the water vapour pressure in the closed space 27. The water vapour will flow through the membrane into the closed space 27 and this flow of water vapour into the closed space 27, will increase the pressure in this closed space 27. As soon as the pressure in the closed space 27 increases above the saturation pressure that belongs to the temperature of the evaporator 23, the water vapour will condense on the evaporator 23 and flow into a water receptacle 22.

The condensing water vapour generates heat that increases the temperature of the evaporator 23 unless the cooling capacity of the evaporator 23 is sufficient. This means that the cooling capacity of the evaporator 23 limits the quantity of water that can be condensed. If the temperature of the evaporator 23 rises, the pressure of the water vapour in the closed space 27 rises as well and due to the reduced pressure difference on both sides of the membrane less water vapour will enter the closed space 27 so that no additional measures are necessary. In the situation that the water vapour pressure in the ambient air is low, the air is dry and/or cold, it is possible that insufficient water vapour enters the closed space 27 through the membrane. Then the quantity of condensing water reduces and there is less heat generated through condensing. This means that the temperature of the evaporator 23 lowers. In order to prevent freezing of the evaporator 23 the control system must then reduce the cooling capacity of the heat pump 2 or switch it off.

A pump 20 will pump the condensed water through a condensed water drain 19 into a tank 21, where it is available for further use. A vacuum pump 24 removes the air from the closed space 27, so that there is a pressure difference of approximately one atmosphere over the membrane assemblies 10. If other gases than the water vapour leak through the membranes into the closed space 27 the vacuum pump 24 will remove these. In situations where in the water level in the tank 21 is for instance 10 meters below the closed space 27, it is possible to connect the drain 19 without the pump 20 to the tank 21. It is possible then to maintain the near vacuum in the closed space 27 and to have an open connection with the tank 21, the water level in the drain 19 will then be approximately 10 meters above the water level in the tank 21.

From the above it is clear that the difference in the pressure of the water vapour on both sides of the membrane determines the quantity of water entering the closed space 27. The pressure difference whereby the water vapour enters the closed space 27 only arises when the temperature inside the closed space 27 is lower than the temperature of the ambient air. The pressure difference increases as the temperature difference between inside and outside the closed space 27 increases, and with that the collected quantity of water increases but can only arise if there is sufficient water vapour pressure in the ambient air and the ambient air is not too dry. The heat pump creates the temperature difference between the ambient air and the closed space 27.

The membrane assemblies 10 must be cleaned from time to time, depending on the circumstances in the ambient air. Sprays heads 9 spray water on the membranes of the membrane assemblies 10 and rinse their outer surfaces clean and free of dust. The rinsing water assembles in the water receptacle 15 and drains away through drainpipe 17 to the drain 16.

The disclosed embodiment has a heat pump 2, which comprises a compressor 1, a condenser 6, and an evaporator 23, connected by piping 8 through which refrigerant circulates. The compressor 1 compresses the refrigerant, which refrigerant condenses to a fluid in the condenser 6, thereby releasing heat, and which fluid evaporates in the evaporator 23 to a gas, thereby cooling the inside of the closed space 27. It is possible to use other types of heat pumps that cool the inside of the closed space 27. For instance in a further embodiment instead of circulating refrigerant it is possible to circulate water and water vapour, whereby compressed water evaporates in the closed space 27, and the compressor 1 compresses water vapour to water.

In another further embodiment of a heat pump an absorbent can be used, such as described hereafter. Also heat pumps with a carrier fluid/gas such as NH3 are known. In the embodiment, the circulating fluid can be water that evaporates in a evaporator in the cooling space 27. The water vapour flows through piping alternating to a first vessel and the second vessel and an absorbent such as silica gel absorbs the water vapour. Solar heat heats the vessel that is not absorbing the water vapour, respectively the second vessel and alternating the first vessel, and the absorbent dries because of the heating and the evaporating water vapour flows through piping to a heat exchanger where it condenses and whereby the ambient air cools the heat exchanger.

It will be clear that combinations of the earlier described embodiments for cooling the inside of the closed space 27 are possible and within the scope of the invention. In a further embodiment, it is also possible that the evaporator 23 has cooling surfaces that are located inside the closed space 27 or that the cooling surfaces form part of the wall of the closed space 27. In that situation, other parts of the evaporator 23 can be outside the closed space 27. In a further embodiment, the closed space 27 can include a pump that transports the water vapour from the membrane to the cooling surface.

A control system (not shown) controls the various parts of the described installation, the control system has sensors for instance for measuring the temperatures, water levels, and gas pressures.

Figure 2 shows an embodiment of the water producing installation with a wind turbine with a tower 31 supported on a foundation 35 via a bearing 34. Support 33 keeps the tower 31 upright and wheels 32 mounted in a ring of the support 33 make it possible that the tower 31 rotates around a vertical axis, the wheels 32 are provided with a drive (not shown) for rotating the tower 31 with the blades 32 to the wind. On top of tower 31 a nacelle 29 supports the blades 30 of the wind turbine, the compressor 1 is in the nacelle 29 and the rotating blades 30 drive the compressor 1.

The inlet opening 12 is at the side of the blades 30 in the lower part of the tower 31; the outlet opening 3 is at the opposite side of the tower 31 near the top of a tower 31. The air duct 5 connects the inlet opening 12 and the outlet opening 3. The closed space 27 is located alongside the air duct 5 and the membrane assemblies 10 extend into the air duct 5 so that the upwards flowing air in the air duct 5 flows over the membranes. The air duct 5 has spray heads 9 above the membrane assemblies 10 and the water receptacle 15 is below the membrane assemblies 10. The evaporator 23 is in the closed space 27 and the condenser 6 is in the air duct 5 immediately above the spray heads 9. In a further embodiment (not shown) the evaporator 23 can be in the air duct 5 near the inlet opening 12, so that the height of the air duct 5 above the evaporator 23 forms a chimney in which the air heated in the evaporator 23 can rise and expand and so creates a strong upward air flow.

The water tank 21 is below the closed space 27 and is filled with the pump 20 (not shown). In a further embodiment (not shown), where the closed space is higher in the tower 31 and the water tank 21 is near the bottom of the tower 31 and the water level in the water tank 21 is more than 10 meters below the closed space 27, it is possible to drain the closed space 27 without the use of a pump.

It will be clear to the skilled man that the wind turbine can be positioned on different type of towers. For instance in an embodiment the tower is stationary, and the nacelle rotates on top of the tower. It is then possible that the closed space 27 is stationary or that it rotates with the nacelle.

For driving the various components of the installation shown in figure 2, which includes the control system, there is a power supply (not shown). The power supply can be external, for instance from the grid, or the blades 30 of the wind turbine can drive a generator (not shown) that is connected to an accumulator and so makes power available for the various equipments.

Figure 3 shows an embodiment of the membrane assembly 10. A hollow fibre 38 of the suitable semi permeable material with a length of approximately 1 m and a diameter of 3 mm is bent for instance in a U-shaped form and both ends of the fibre 38 are embedded in the flange 36 by moulding them in a resin. The openings 37 of the hollow fibre 38 end at one side of the flange 36, which is the side of the inner room of the closed space 37. One flange 36 can contain several hundred fibres 38 so that a membrane assembly 10 comprising one flange 36 will have a membrane surface of several square metres. If necessary, the flange 36 will have a support structure for supporting the U-shaped hollow fibres 38. The membrane assemblies 10 are mounted with their flanges 36 in the wall of the closed space 27 in such a way that used membrane assemblies 10 can rapidly be replaced by new ones.

## Claims

1. Device for producing water from ambient air comprising a heat pump (2) with a cooling unit (23) and a receiver (22) for collecting the water that formed as condensed water vapour on a cooling surface of the cooling unit, **characterized in that** the cooling surface (23) is located in a closed space (27) and a water vapour permeable membrane (38) separates the ambient air and the closed space.

2. Device in accordance with claim 1 wherein the cooling surface comprises at least part of a wall of the closed space (27).

3. Device in accordance with claim 1 or 2 wherein the closed space includes a pump for transporting water vapour to the cooling surface.

4. Device in accordance with claim 1, 2 or 3 wherein the heat pump (2) comprises a compressor (1), a condenser (6) and an evaporator (23), the evaporator forming the cooling unit and the compressor, condenser and evaporator being connected by piping (8).

5. Device in accordance with one of the previous claims wherein the closed space (27) is connected to a vacuum pump (24) for removing air and/or other gasses from the closed space.

6. Device in accordance with one of the previous claims wherein the closed space (27) has insulating walls (26).

7. Device in accordance with claim one of the previous claims wherein the membrane comprises hollow fibres (38) and the closed space (27) connects to the inside (37) of the hollow fibres.

8. Device in accordance with one of the previous claims wherein the membrane (38) comprises a number of units mounted in exchangeable cassettes (10).

9. Device in accordance with one of the previous claims wherein a canal (55) guides an airflow (4) over the membrane (10) and wherein the canal comprises partitions (11) to block fluid particles.

10. Device in accordance with one of the previous claims wherein a rinsing system (9, 15) cleans the ambient-air side of the membrane (10).

11. Device in accordance with one of the previous claims wherein a ventilator (7) provides airflow over the membrane (10).

12. Device in accordance with one of the previous claims wherein the condenser (6) includes a heat exchanger that generates airflow over the membrane (10).

13. Device in accordance with one of the previous claims wherein the condenser (6) includes a heat exchanger and a ventilator (7) generates airflow over the membrane (10) and the heat exchanger.

14. Device in accordance with one of the previous claims wherein a turbine, such as a wind turbine (30) or a water turbine, drives the compressor (1).

15. Device in accordance with one of the previous claims wherein the heat pump (2) is mounted in the tower (31) of a wind turbine (30).

16. Device in accordance with claim 15 wherein the tower (31) has an inlet opening (12) for the airflow along the membrane (10) and/or a heat exchanger and wherein the inlet opening rotates with the direction of the wind.
